# EUROPÄISCHE PATENTSCHRIFT

(11) **EP 1 999 945 B1**
(45) Veröffentlichungstag und Bekanntmachung des Hinweises auf die Patenterteilung: **14.11.2012**
(21) Anmeldenummer: 07710810.8
(22) Anmeldetag: 19.03.2007
(51) Int. Cl.: H04N 1/06, G03F 7/20

(54) **INNENTROMMELBELICHTER**
INTERNAL-DRUM IMAGESETTER
IMAGEUR A TAMBOUR INTERNE

(30) Priorität: 21.03.2006 CH 438062006
(43) Veröffentlichungstag der Anmeldung: 10.12.2008
(73) Patentinhaber: XPOSE Holding AG, 5014 Gretzenbach (CH)
(72) Erfinder: BERNER, Peter, CH-5102 Rupperswil (CH); LÜSCHER; Hans, 8832 Wollerau (CH)
(74) Vertreter: EGLI-EUROPEAN PATENT ATTORNEYS
(86) Internationale Anmeldenummer: PCT/CH2007/000151
(87) Internationale Veröffentlichungsnummer: WO 2007/107030

(56) Entgegenhaltungen:
- EP-A- 1 189 425
- EP-A- 1 630 604
- EP-A2- 1 543 899
- WO-A-98/52345
- WO-A2-03/058349

## Beschreibung

Die Erfindung betrifft einen Innentrommelbelichter zur Belichtung von plattenförmigen Datenträgern nach Patentanspruch 1.

Im speziellen betrifft die Erfindung einen Innentrommel-Offsetplattenbelichter für konventionelle Offsetplatten.

In der Drucktechnik haben wegen der überwiegenden Vorteile die digitalen Verfahren, auch bekannt als sogenannte CtP (Computer to Plate) Verfahren, Einzug gehalten. Es werden insbesondere Trommelbelichter verschiedenster Bauweise eingesetzt. Innentrommelbelichter für die Belichtung von plattenförmigen Datenträgern mittels Laser-Dioden sind in der Drucktechnik in verschiedenen Ausführungsformen grundsätzlich ebenfalls bereits bekannt.

Die WO-98/52345 beschreibt beispielsweise einen Innentrommel-Thermobelichter zum Übertragen von Daten auf plattenförmige Datenträger, welcher einen Aufnehmer - zum Anordnen der Datenträger - und einen Übertragungsköpf mit mindestens einem Übertragungsmittel - zum Übertragen der Daten auf den Datenträger - umfasst. Der Aufnehmer ist zumindest teilweise zylindrisch geformt und die zur Aufnahme von Daten vorgesehene Seite des Datenträgers ist der Zylinderachse des Aufnehmers zugewandt. Der Aufnehmer und der Übertragungskopf sind relativ zueinander in einer Weise bewegbar, dass der Übertragungskopf in Richtung der Zylinderachse des Aufnehmers bewegbar und um die Zylinderachse des Aufnehmers rotierbar angeordnet ist. Die Übertragungsmittel sind als Laser-Dioden ausgebildet, die in einem Wellenlängenbereich von 830 nm arbeiten, was ausserhalb des sichtbaren Wellenlängenbereiches von 380-780 nm liegt und speziell für die Belichtung von Thermoplatten geeignet ist. Die einfache Bauweise dieser Innentrommel-Belichter ermöglicht eine hohe Zuverlässigkeit und einfache Handhabbarkeit. Jedoch können konventionelle Offsetplatten, die für eine Belichtung im sichtbaren Wellenlängenbereich ausgebildet sind, mit diesem Innentrommelbelichter nicht belichtet werden. Begründet ist dies nicht nur im Wellenlängenbereich der verwendeten Laser-Dioden, sondern auch in den Spezifikationen der zugehörigen Optik und der Ansteuerungselektronik, die natürlich ebenfalls für den Infrarotbereich ausgelegt sind.

Bei allen Vorteilen, die Thermobelichter bieten (normales Tageslicht wirkt beim Belichten nicht störend, etc.), haben sie doch den Nachteil, dass Thermoplatten nach wie vor erheblich teurer als konventionelle Platten für die Belichtung im sichtbaren Wellenlängenbereich sind.

Es gibt zwar Lösungen, bei denen die digitale Belichtung auch auf konventionelle Offsetplatten angewendet wird. Ein derartiger Plattenbelichter (platesetter) ist der vollautomatische UV-setter 710-2 von BasysPrint, allerdings handelt es sich hier um einen Flachbett-Plattenbelichter. Seine Arbeitsweise beruht auf dem von BasysPrint verwendeten CtcP (Computer to conventional Plate) System. Dieses Gerät verwendet zur Erhöhung der Belichtungsgeschwindigkeit zwei Belichtungsköpfe, eine UV-Lichtquelle für die Erzeugung von polarisiertem UV-Licht und eine elektronisch ansteuerbare Gitter-Anordnung (digital screen) mit einer Vielzahl von adressierbaren Zellen, wobei das von den einzelnen Zellen gesteuerte UV-Licht anschliessend von einer Optik auf die zu belichtende Platte fokussiert wird. Wie erwähnt sind die Platten hier konventionelle, UV-empfindliche Offsetplatten. Ein Nachteil dieses Gerätes besteht darin, dass einzelne, sehr leistungsstarke und auch sehr teure UV-Lampen verwendet werden müssen.

Das Ziel besteht nun darin, einen Innentrommel-Belichter von einfacher Bauweise anzugeben, mit dem auch konventionelle Offsetplatten digital belichtet werden können. Zusätzlich soll das Gerät auch kostengünstig umrüstbar sein, um bei Bedarf sowohl für die digitale Thermobelichtung als auch für die digitale Belichtung konventioneller Offsetplatten eingesetzt werden zu können.

Da seit kurzem nun auch preiswerte und leistungsfähige Violett-Laserdioden auf dem Markt erhältlich sind, kann das Problem durch eine Kombination mit einem Gerät gemäss der Bauweise wie in der WO-98/52345 beschrieben, gelöst werden.

Die Aufgabe wird somit durch die Merkmalskombination gemäss Patentanspruch 1 gelöst.

Ein Innentrommelbelichter zum Übertragen von Daten auf plattenförmige Datenträger hat einen Aufnehmer zum Anordnen der Datenträger und einen Übertragungskopf mit mindestens einem Übertragungsmittel zum Übertragen der Daten auf den Datenträger. Der Aufnehmer ist dabei vorteilhafterweise zumindest teilweise zylindrisch geformt. Die zur Aufnahme von Daten vorgesehene Seite des Datenträgers ist der Zylinderachse des Aufnehmers zugewandt. Der Aufnehmer und der Übertragungskopf sind relativ zueinander in einer Weise bewegbar, dass der Übertragungskopf in Richtung der Zylinderachse des Aufnehmers bewegbar und um die Zylinderachse des Aufnehmers rotierbar angeordnet ist. Die Übertragungsmittel sind als violette Hochleistungs- Laser-Dioden mit einer Wellenlänge von 405 nm ausgebildet und die Laserdioden sind in einer leicht austauschbaren Laser-Dioden-Anordnung angeordnet.

Die Vorteile bestehen insbesondere darin, dass die sehr viel kostengünstigeren konventionellen Offsetplatten digital belichtet werden können, dass die verwendeten Lichtquellen, nämlich die eingesetzten Laser-Dioden, sehr langlebig und

somit sowohl in der Anschaffung als auch im Betrieb sehr kostengünstig sind, und dass das Gerät mit geeigneten Diagnostiksystemen (die an dieser Stelle nicht näher beschrieben, dem Fachmann aber grundsätzlich bekannt sind) in einer Weise überwacht und betrieben werden kann, dass bei Ausfall einer einzelnen Laser-Diode das Gerät dennoch - wenngleich auch etwas langsamer - funktionstüchtig bleibt.

Dabei können Diagnostiksysteme mit Steuersystemen in einer Weise kombiniert werden, dass es die Überwachung und Steuerung des Energie-Outputs der einzelnen Laserdioden ermöglicht. Es ermöglicht auch die Steuerung des Belichtungsvorganges in Abhängigkeit von der Funktionstüchtigkeit einzelner Laser-Dioden.

Der Innentrommelbelichter ist vorzugsweise so aufgebaut, dass mit dem Diagnostik- und Steuersystem der Ausfall einzelner Laserdioden detektierbar ist und die Steuerung des Belichtungsvorgangs in der Folge mit langsamerer Geschwindigkeit durchführbar ist, wobei die Steuerung derart ausgelegt ist, dass der grösste verbleibende zusammenhängende Block von noch funktionierenden Laserdioden verwendet wird, um die Belichtung durchzuführen. Der Innentrommelbelichter ist zudem vorzugsweise auch so aufgebaut, dass das Diagnostik- und Steuersystem mit einer Funktion zur automatischen Justierung des Energie-Outputs nach dem Ersatz einer defekten Laser-Diode ausgerüstet ist.

Als Lichtquellen bzw. als Übertragungsmittel werden somit Halbleiter-Laser in Form von Laser-Dioden bevorzugt. Vorzugsweise sind dies Laser-Dioden-Anordnungen (Arrays) mit beispielsweise 32 oder 64 Laser-Dioden. Je höher die Anzahl der Laser-Dioden, desto höher ist grundsätzlich auch die erreichbare Bebilderungs-Geschwindigkeit (Belichtungs-Geschwindigkeit) für die plattenförmigen Datenträger.

Die kostengünstige Umrüstbarkeit wird insbesondere dadurch erreicht, dass die Laser-Dioden in einer oder mehreren leicht austauschbaren Laser-Dioden-Anordnungen angeordnet sind. Dabei sind die Laser-Dioden einzeln ebenfalls leicht austauschbar. Die leichte Austauschbarkeit ermöglicht es, dass beispielsweise entweder Laserdioden mit einer Wellenlänge von 405 nm, oder aber Laserdioden mit einer Wellenlänge von 830 nm eingesetzt werden können. Dadurch erhält der Innentrommelbelichter nicht nur die angestrebte Flexibilität zur Belichtung unterschiedlichster Plattenmaterialien, die leichte Austauschbarkeit einzelner Laser-dioden ermöglicht auch rasche Störungsbehebungen.

Die leichte Austauschbarkeit kann somit unter zwei Aspekten gesehen werden. Im Falle der Ersatzes einzelner oder mehrerer Laser-Dioden infolge von Ausfällen wird die leichte mechanische Austauschbarkeit von Laser-Dioden-Anordnungen oder einzelner Laser-Dioden noch unterstützt durch die vorstehen erwähnte Funktion, wonach das Diagnostik- und Steuersystem mit einer Funktion zur automatischen Justierung des Energie-Outputs nach den Ersatz einer defekten Laser-Diode ausgerüstet ist. Dadurch werden die Offestplattenbelichter-Ausfallzeiten sehr stark reduziert, weil zur Behebung der Störung kein spezialisiertes Wartungspersonal beigezogen werden muss. Im Falle der Ersatzes von Laser-Dioden infolge einer geplanten Geräteumrüstung auf eine andere Wellenlänge kommen die gleichen Vorteile natürlich ebenfalls zum Zug, allerdings muss in diesem Fall die Belichtungsoptik in der Regel ebenfalls angepasst werden (siehe dazu auch die untenstehenden weiteren Ausführungen).

Hochleistungs-Laser-Dioden in einem Wellenlängenbereich von 405 nm und Spitzenleistungen von bis zu 140 mW im gepulsten Betrieb werden beispielsweise von Nichia angeboten. Damit können auch konventionelle, UV-empfindliche Offsetplatten belichtet werden. Die angegebenen Leistungswerte beziehen sich auf heute im Handel erhältliche Laser-Dioden, selbstverständlich kann für künftige Anwendungen dann natürlich auch der Einsatz von noch leistungsfähigeren Laser-Dioden in Erwägung gezogen werden (sofern diese erhältlich werden). Laser-Dioden für andere Wellenlängen, beispielsweise für 830 nm, also im nahen Infrarot, werden bereits seit längerer Zeit für die Belichtung von Thermoplatten eingesetzt (vgl. dazu den eingangs erwähnten Stand der Technik).

Im Hinblick auf die Bereitstellung eines Offsetplattenbelichters, der für den Einsatz mit verschiedensten Plattentypen leicht umrüstbar ist, muss aber auch berücksichtigt werden, dass Optiken, die in weit auseinanderliegenden Wellenlängenbereichen eine hinreichend gute Abbildungsleistung erbringen, derart teuer sind, dass sie für den Einsatz in Innentrommelbelichtern nicht in Frage kommen. Es erweist sich deshalb als notwendig, entweder auswechselbare Optiken zu verwenden, oder aber Innentrommelbelichter mit mindestens zwei eingebauten Optiken zu verwenden, wobei, wie im vorliegenden Fall, wenigstens eine dieser Optiken zur Übertragung der Wellenlänge von 405 nm geeignet sein muss. Selbstverständlich kann aber auch eine Optik verwendet werden, die neben der Wellenlänge von 405 nm auch noch zur Übertragung anderer Wellenlängen geeignet ist.

In der vorliegenden Anmeldung wurde auf die exakte Beschreibung technischer Details, wie eine Computersteuerung des Belichtungssystems, die Übertragung der Daten auf drehbare Übertragungsmittel (beispielsweise mittels Lichtleitern) die elektrische Kontaktierung mittels Schleifkontakten im Interesse der Kürze der Anmeldung verzichtet. Das Lösen solcher Detailprobleme entspricht selbstverständlich dem Wissen und Können eines mit einer solchen Aufgabe betrauten Fachmanns.

## Patentansprüche

1. Innentrommelbelichter zum Übertragen von Daten auf plattenförmige Datenträger, welcher einen Aufnehmer - zum Anordnen der Datenträger - und einen Übertragungskopf mit mindestens einem Übertragungsmittel - zum Übertragen der Daten auf den Datenträger - umfasst, wobei der Aufnehmer zumindest teilweise zylindrisch geformt ist, die zur Aufnahme von Daten vorgesehene Seite des Datenträgers der Zylinderachse des Aufnehmers zugewandt ist und wobei der Aufnehmer und der Übertragungskopf relativ zueinander in einer Weise bewegbar sind, dass der Übertragungskopf in Richtung der Zylinderachse des Aufnehmers bewegbar und um die Zylinderachse des Aufnehmers rotierbar angeordnet ist und die Übertragungsmittel als Laser-Dioden ausgebildet sind, **dadurch gekennzeichnet, dass** die Laser-Dioden violette Hochleistungs-Laser-Dioden mit einer Wellenlänge von 405 nm sind und dass die Laser-Dioden in einer austauschbaren Laser-Dioden-Anordnung angeordnet sind, und eine Anzahl von Laser-Dioden-Anordnungen vorhanden ist, die jeweils eine Anzahl von Laser-Dioden aufweisen, wobei die Laser-Dioden einzeln austauschbar sind, und die Laser-Dioden eine Leistung von mindestens 100 mW, vorzugsweise mindestens 140 mW, aufweisen, sowie der Übertragungskopf eine Optik aufweist, die zur Übertragung der Wellenlänge von 405 nm geeignet ist und die zur Übertragung einer Wellenlänge im nicht sichtbaren Wellenlängenbereich geeignet ist.

2. Innentrommelbelichter nach Anspruch 1, **dadurch gekennzeichnet, dass** der Innentrommelbelichter mit einem Diagnostik- und Steuersystem zur Überwachung und Steuerung des Energie-Outputs der einzelnen Laser-Dioden sowie zur Steuerung des Belichtungsvorganges in Abhängigkeit von der Überwachungsfunktion versehen ist.

3. Innentrommelbelichter nach Anspruch 2, **dadurch gekennzeichnet, dass** mit dem Diagnostik- und Steuersystem der Ausfall einzelner Laser-Dioden detektierbar ist und die Steuerung des Belichtungsvorgangs in der Folge mit langsamerer Geschwindigkeit durchführbar ist, wobei die Steuerung derart ausgelegt ist, dass der grösste verbleibende zusammenhängende Block von noch funktionierenden Laserdioden verwendet wird, um die Belichtung durchzuführen.

4. Innentrommelbelichter nach Anspruch 2 oder 3, **dadurch gekennzeichnet, dass** das Diagnostik- und Steuersystem mit einer Funktion zur automatischen Justierung des Energie-Outputs nach den Ersatz einer defekten Laser-Diode ausgerüstet ist.

## Claims

1. Internal drum imagesetter for transferring data onto plate-like data storage media which has a sensor for arranging the data storage media and a transfer head with at least one transfer means for transferring data to the data storage medium, wherein the sensor is at least partially cylindrical in shape, the side of the data storage medium provided for the acquisition of data faces the cylinder axis of the sensor and wherein the sensor and the transfer head are movable relative to one another, such that the transfer head is movable in the direction of the cylinder axis of the sensor and is disposed so as to be rotatable about the cylinder axis of the sensor and the transfer means are in the form of laser diodes, **characterized in that** the laser diodes are violet high-power laser diodes with a wavelength of 405 nm and that the laser diodes are arranged in an easily interchangeable laser diode array and a number of laser diode arrays is available, each of which has a number of laser diodes, wherein the laser diodes are individually interchangeable, and the laser diodes have a power of at least 100 mW, preferably at least 140 mW, and also the transfer head has an optical system which is suitable for the transmission of a wavelength of 405 nm and which is suitable for the transmission of a wavelength which lies outside the visible wavelength range.

2. Internal drum imagesetter according to Claim 1, **characterized in that** the internal drum imagesetter is provided with a diagnostic and control system for monitoring and controlling the energy output of the individual laser diodes and for controlling the exposure process depending on the monitoring function.

3. Internal drum imagesetter according to Claim 2, **characterized in that** the failure of individual laser diodes is detectable using the diagnostic and control system and the exposure process can subsequently be controlled at a slower speed, wherein the control system is designed such that the largest remaining coherent block of laser diodes which are still functioning is used to carry out the exposure.

4. Internal drum imagesetter according to Claim 2 or 3, **characterized in that** the diagnostic and control system is equipped with a function for the automatic adjustment of the energy output following the replacement of a faulty laser diode.

## Revendications

1. Développeuse à tambour interne pour transmettre des données sur un support de données en forme de plaque, qui comprend un tambour de ramassage pour disposer le support de données - et une tête de transmission avec au moins un moyen de transmission - pour transmettre les données sur le support de données, dans laquelle le tambour de ramassage est de forme au moins partiellement cylindrique, qui est tournée vers le côté prévu pour la réception des données du support de données de l'axe cylindrique du tambour de ramassage et dans laquelle le tambour de ramassage et la tête de transmission sont déplaçables l'un par rapport à l'autre d'une manière telle que la tête de transmission soit déplaçable dans la direction de l'axe cylindrique du tambour de ramassage et soit disposée rotativement autour de l'axe cylindrique du tambour de ramassage et le moyen de transmission est conçu comme des diodes laser, **caractérisé en ce que** les diodes laser sont des diodes laser à haute performance avec une longueur d'onde de 405 nm et **en ce que** les diodes laser sont disposées dans un assemblage de diodes laser remplaçables, et une pluralité d'assemblages de diodes laser est présente, qui présentent respectivement une pluralité de diodes laser, dans laquelle les diodes laser peuvent être remplacées individuellement et les diodes laser présentent une puissance d'au moins 100 mW, de préférence d'au moins 140 mW, et la tête de transmission présente une optique, qui est appropriée à la transmission de la longueur d'onde 405 nm et est appropriée à la transmission d'une longueur d'onde dans la plage de longueur d'onde non visible.

2. Développeuse à tambour interne selon la revendication 1, **caractérisée en ce que** la développeuse à tambour interne est pourvue d'un système de commande et de diagnostic pour surveiller et commander le rendement d'énergie des diodes laser individuelles ainsi que commander le processus d'exposition en fonction de la fonction de surveillance.

3. Développeuse à tambour interne selon la revendication 2, **caractérisée en ce que** les pannes de diodes laser individuelles peuvent être détectées avec le système de commande et de diagnostic et la commande du processus d'exposition peut être effectuée en conséquence avec une vitesse plus lente, dans laquelle la commande est conçue de telle sorte que le plus grand bloc connexe restant de diodes laser fonctionnant encore est employé pour effectuer l'exposition.

4. Développeuse à tambour interne selon les revendications 2 ou 3, **caractérisé en ce que** le système de commande et de diagnostic est équipé d'une fonction d'ajustement automatique du rendement d'énergie après le remplacement d'une diode laser défectueuse.
